# EUROPEAN PATENT APPLICATION

(11) **EP 3 591 527 A1**
(43) Date of publication of application: **08.01.2020**
(21) Application number: 18465544.7
(22) Date of filing: 04.07.2018
(51) Int. Cl.: G06F 9/54, B60K 35/00

(54) **HUMAN-MACHINE-INTERFACE FOR A VEHICLE**

(71) Applicant: Continental Automotive GmbH, 30165 Hannover (DE)
(72) Inventor: Popa, Razvan, 307285 Mosnita Noua (RO)

(57) **Abstract**

A human-machine-interface (102) for a vehicle (200) is provided comprising a human-machine-interface screen (116), a processor (106) configured to control at least one device (122) of the vehicle (200); a communication interface (108) configured to communicate with a mobile device (104) of a user; wherein the processor is configured to provide status data of the device (122) via the communication interface (108) to the mobile device (104), which enables the mobile device (104) to mirror the human-machine-interface screen (116) on mobile device screen (126) .

## Description

A human-machine-interface for a vehicle for mirroring a screen to a screen of a mobile device is provided. Further, a vehicle comprising the human-machine-interface, a method for a communication between a human-machine-interface and a mobile device of a user, a program element and computer readable medium are provided.

Display mirroring, where the display of one device is reproduced on one or more other devices is known, e. g., from remote desktops and similar programs. Display mirroring may comprise just a second display without a further functionality than the display itself, or a display where a controller connected to the display mirroring the first display controls the display. Usually, these devices are arranged as a client/server architecture where the first device is configured as server and the second device as client. In this case it is possible to have input devices connected to the client and/or to the server, as a keyboard, touch screen, etc., with which input actions may be performed that control the first display. More sophisticated, the input may result in actions concerning the first device or hard- or software connected to the first device. A graphical mouse pointer or keyboard entries are, e. g., controlled in such a way that the mouse data or the keyboard data is sent directly to the server, that displays the mouse or the keyboard data on its screen, but the mirroring at the client display works nevertheless graphically. It is possible to print on the remote printer connected to the server, to output sound remotely etc. using the second device or client, respectively, and the second display. Usually, the mirroring is performed by transmitting, maybe in a compressed format, the pixels of the first screen to the second device resulting in a high consumption of resources on the client and server devices and on the transmission channel.

A display mirroring with a low data transmission rate is desired.

This problem is solved by a human-machine-interface and a method described in embodiments of the invention.

According to an aspect, a human-machine-interface for a vehicle is provided, comprising a human-machine-interface screen, a processor configured to control at least one device of the vehicle; a communication interface configured to communicate with a mobile device of a user; wherein the processor is configured to provide status data of the device via the communication interface to the mobile device, which enables the mobile device to mirror the human-machine-interface screen on a mobile device screen.

The screen of the device of the vehicle shows objects that are displayed graphically. E. g., a background picture or animations are representations of an object. Each object can be identified, e. g., by a unique ID and a type-ID identifying the type of graphical object, and may be characterized by a number of values. The values may be, e.g., associated with a parameter or a so-called key, so that key-value-pairs are obtained.

According to an embodiment, the human-machine-interface is connected to a database, wherein the status data is stored in the database. The data as, e. g., key-value pairs are according to this embodiment stored in the database. Of course, there are other possibilities, as e. g., xml attributes to configure an object or binary or other pre-defined fixed formats, etc.

The parameters of a graphical object, e. g., a gadget, a window, a picture or a cursor, may comprise one or more graphical parameters with respect to the origin, e. g., coordinates to a given point in the graphical plane as origin, and the size, so that an object of that type can be displayed at a position and a size. Further parameters may be a color code or a color-ID, shape-ID, pattern-ID, or ID of another object being part of the object etc.

The graphical object may furthermore represent a functional object that provides buttons, checkboxes, drop-down lists or menus, text entry boxes, etc. The status of these functional objects as, e. g., "button pressed", "radio button checked", "string" or a string displayed representing a status information of the vehicle or devices inside the vehicle. The data source may be directly the connected devices, as, e. g. an air conditioning system, or the data may be retrieved from the infotainment center, or from a processor using a data bus inside the vehicle. The connected devices may but need not be devices that can be controlled by a user, as, e. g. the yet mentioned air conditioning system.

According to an embodiment the at least one device of the vehicle is a radio, an infotainment system, a navigation device, an air conditioning unit, or a mass storage device. Therefore, the status data displayed may be, e. g., navigation data, a tuned radio station or frequency, song titles of stored music files, addresses from an address book, data or a status regarding mobile communication, etc.

Thus, the graphical parameters, the functional parameters and the status parameters of the car or devices to be controlled inside the car may be stored as key-value entries or similarly as described above in the database that is accessed by the processor. The parameters define a graphical representation of a graphical object or a graphical element of the object, as e. g., a string, an icon.

In the following, the term key-value-pair is used representative of any format or way to store data which is associated to a parameter.

Some values of a key-value pair may be configured to be modifiable. E. g., the key-value of the air condition unit may be defined in a range of integer values from zero to 10 corresponding to the intensity of the air conditioning. The user may modify the value using the corresponding graphical functional box of the human-machine-interface. If he enters "0" the air conditioning is switched off. If he enters "10" the air conditioning is set to its maximum. In this way, the processor accessing the database and controlling the air conditioning system retrieves this value and changes the status of the air conditioning device.

According to an embodiment the control data is data generated by a controller controlling the user interface of the display of the mobile device.

According to an embodiment the status data in the database is updated with the control data from the mobile device. I. e., the processor can read the stored values and update the screen of the human-machine-interface and can control devices to which it is connected. If the status of the object changes, the values in the database are modified. So, the user may modify graphical or functional objects, and the values are transmitted over the communication interface and written into the database.

The processor thus may be configured, according to an embodiment, to use control data transmitted from the mobile device to control the at least one device and to mirror the mobile device screen on the human-machine-interface screen.

This means, that the user can modify the status of the graphical or functional objects, where the original status of the objects corresponds to the status of the connected devices. The modified status of the objects is transmitted over the communication interface to the human-machine-interface, written into the database and the processor retrieves the data, adapts the screen of the human-machine-interface and in case of functional objects, controls the corresponding connected devices according to the modified and stored status in the database.

The processor may be hereby informed by either the controller of the human-machine-interface or by the processor of the remote mobile device that a modification has occurred and new values have to be read. Alternatively, the synchronization may be performed by polling the database and comparing the previous and current values or other known methods.

The mobile device may have pre-defined information of all available objects. I. e. , it is able to display a graphical object according to its parameters or characteristics represented as key-value-pairs, respectively, in the same way as the human-machine-interface screen, with the knowledge of the appearance or shape of an object to be displayed. This means that with the values by which an object is characterizes, the object can be displayed on the screens of both devices identically.

According to an embodiment, the communication interface is an interface according to a Bluetooth Low Energy protocol and the status data is stored as a Bluetooth Generic Attribute (GATT) profile.

The Bluetooth server then comprises a GATT database and the client APP can access the services and characteristics from the DUC GATT database attached to processor of the human-machine-interface using the specific GATT procedures. This embodiment is explained in more detail further below in this description.

According to an aspect, a vehicle is provided comprising a human-machine-interface that may control a device inside the vehicle, for example an air conditioning system.

According to an aspect, a method for a communication between a human-machine-interface and a mobile device of a user is provided, comprising the steps: providing status data of a device of a vehicle via a communication interface by a human-machine-interface to the mobile device, which enables the mobile device to mirror a human-machine-interface screen on a mobile device screen; and controlling the device of the vehicle according to the status information.

According to an aspect, a program element is provided, which when being executed by the processor of a human-machine-interface, instructs the vehicle to perform the steps of the method above. The program element may be an embedded element or an application on an operating system.

According to an aspect, computer readable medium is provided on which such a program element is stored. E. g., the computer readable medium is a mass storage on a disk or a flash storage or similar.

In the following embodiments of the invention are illustrated by the Figures and explained in more detail.
- Figure 1: shows a human-machine-interface connected to a mobile device.
- Figure 2: shows a vehicle comprising a human-machine-interface according to an embodiment.
- Figure 3: shows a method according to an embodiment.

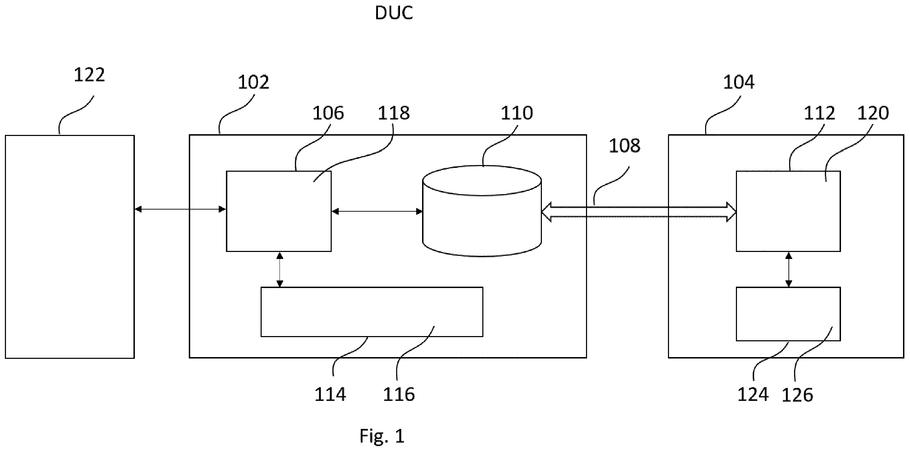

The human-machine-interface (HMI) 102 and the method 300 for a communication between the human-machine-interface 102, respectively, are explained in the following at hand of an embodiment using a Bluetooth protocol for the communication interface 108 and Figure 1. In this embodiment, the method comprises a screen mirroring function for a device as the human-machine-interface 102 featuring a screen 116 of a display 114 and user action entry capabilities using a Bluetooth Low Energy (BLE) data communication interface with a Generic Attribute Profile (GATT) profile according to, e. g., the Bluetooth Core Spec v. 4.0. Using this method, the screen content, i. e. the visual information that are displayed on the human-machine-interface device 102 to be controlled (named hereinafter Device Under Control, or DUC) can be presented synchronously on the screen 124 of the display 126 of a remote device 104, as, e.g. a smart mobile device, i. e., a smart phone or tablet, with which it is connected via Bluetooth. The screen content displayed on both devices 102, 104 can be the same, so that a user can use the one 114 or the other display 124 for performing various actions on the DUC 102.

The human-machine-interface-device (DUC, 102) may feature, e. g., a version 4.0 Bluetooth Interface, combining Bluetooth Basic Rate (BR) and Bluetooth Enhanced Data Rate EDR (v2.1) physical link and Bluetooth Low Energy (LE) (v4.0) physical link.

The DUC 102 will have the GATT server role, where the server is run on the processor 106, and provides a GATT database 110, which contains the HMI control specific services and characteristics (named also HMI profile) . These services and characteristics can be accessed by any GATT client 120 (smart phone application, named BT Client App), using the Attribute Protocol, over the BLE transport.

When starting up, the DUC 102 enters the BLE advertising state. In this state, the DUC 102 broadcasts over BLE, periodically, connectable advertising data packets.

The BT Client App 120 on the processing device 112 of the mobile device 104 can scan, over BLE, for the advertising data packets and can receive them if they exist. Once it receives the advertising data packets, the BT Client App 120 can choose to connect to the broadcasting DUC 102 over BLE, and to get in this way access to the GATT database 110 data content, using the ATT protocol. Once connected with the BT Client App 120 on the mobile device processor 112, the DUC 102 stops the broadcast of the advertising data packets and enters the BLE non-advertising state. The DUC 102 remains in this state as long as the current BLE connection with the BT Client App 120 is active.

When an ongoing BLE data connection with the BT Client App 120 is terminated, for whatever reason, the DUC 102 enters back to the BLE advertising state and broadcasts connectable advertising data packets. Once connected with the DUC 102, the BT Client APP 120 can access the services and characteristics from the DUC GATT database using the specific GATT procedures (see Bluetooth Core Specification Version 4.0, Vol. 3, Part G).

The DUC GATT server database 110 contains a collection of services and their associated characteristics, which can be accessed by the BT Client App 120 using the attribute protocol.

A service is a collection of data and associated behaviors to accomplish a particular function or feature of the DUC 102.

Each service includes a collection of characteristics, which contain the data associated with this service. Each individual characteristic can be accessed, i. e., read or write, by the BT Client App 120, according to the configured access permissions.

The DUC 102 will provide the HMI Control Service which is carried out, e. g., by processor 106. This is used to provide all the visual information from the screen content or image of the screen 116, respectively, which is currently displayed on the DUC 102. In addition, the service will provide the HMI control options for this screen 116.

In this invention, the screen 116 is not a collection of image pixels, but it is a collection of pieces of visual information, also called "objects" in this description. E. g., one piece of information or object can be a text character string, a further example is a button with a certain label, etc.

The DUC App 118 updates the service content each time there is an update of the information presented by the DUC display 114.

The HMI Control Service has a collection of HMI characteristics. Each HMI characteristic holds as value an individual piece of information from the screen 116 content that is currently displayed.

For instance, one characteristic can contain the unique identification data of each screen content object. When a new object of the screen 116 is required to be displayed by the DUC 102, then DUC App 118 needs to update accordingly the value of this characteristic in the GATT database 110.

The BT Client App 118 can read from the GATT database 110 the value of all the HMI characteristics and can determine in this way the content of the screen 116 that is currently displayed on the DUC 102. The BT Client App 118 can present this content on the screen 126 of the display 124 of the remote device 104.

The user can use the content of the screen 126 displayed by the remote device 104 to perform any HMI entry action like a button press action, or a text edit action etc. The BT Client App 118 detects this action and interprets it as a new value being required for a specific HMI characteristic from GATT database 110. The BT Client App 118 can write the new value for this characteristic in the DUC GATT database 118 using the write services provided by the GATT profile. Once this characteristic gets updated in the GATT database 110, the DUC App 118 running on processor 106 is notified about the characteristic value change and can perform the required action, according to the new characteristic value. This action is the same with the one that DUC 102 needs to perform when it receives a similar HMI entry action from the user on the DUC HMI 102.

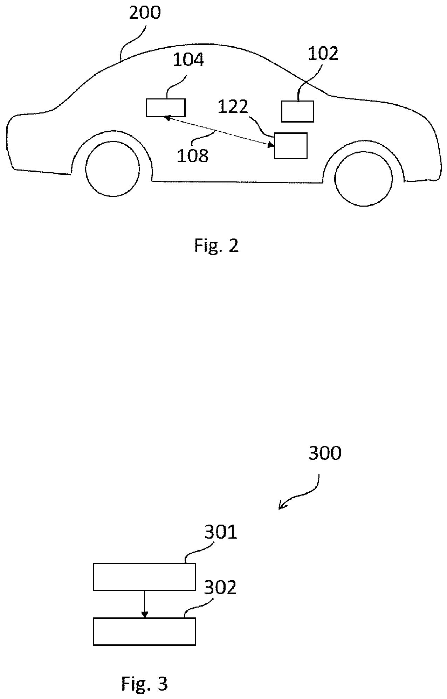

Figure 2 shows a vehicle 200 comprising a human-machine-interface 102 that may control device 122, which is, e. g., an air conditioning system. The human-machine-interface 102 may be operated, e. g., by the driver of the vehicle 200. The human-machine-interface 102 as described above communicates over a communication interface 108, e. g., a Bluetooth LE connection with a GATT profile, with a mobile device 104 that may be, for example, operated by a passenger on a rear seat of the vehicle 200.

Figure 3 shows the method 300 for a communication between a human-machine-interface 102 and a mobile device 104 of a user, comprising the steps
- providing 301 status data of a device 122 of a vehicle 200 via a communication interface 108 by a human-machine-interface 102 to the mobile device 104, which enables the mobile device 104 to mirror a human-machine-interface screen 116 on a mobile device screen 126;
- controlling 302 the device 122 of the vehicle 200 according to the status information.

## Claims

1. Human-machine-interface (102) for a vehicle (200), comprising
- a human-machine-interface screen (116)
- a processor (106) configured to control at least one device (122) of the vehicle (200);
- a communication interface (108) configured to communicate with a mobile device (104) of a user;
wherein the processor (106) is configured to provide status data of the device (122) via the communication interface (108) to the mobile device (104), which enables the mobile device (104) to mirror the human-machine-interface screen (116) on mobile device screen (126).

2. Human-machine-interface (102) according to claim 1, wherein the processor (106) is configured to use control data transmitted from the mobile device (104) to control the at least one device (122) and to mirror the mobile device screen (126) on the human-machine-interface screen (116).

3. Human-machine-interface (102) according to one of the previous claims, wherein the human-machine-interface (102) is connected to a database (110), wherein the status data is stored in the database (110).

4. Human-machine-interface (102) according to claim 3, wherein the status data in the database (110) is updated with the control data from the mobile device (104).

5. Human-machine-interface (102) according to one of the previous claims, wherein the communication interface (108) is an interface according to a Bluetooth Low Energy protocol and the status data is stored as a Bluetooth Generic Attribute (GATT) profile.

6. Human-machine-interface (102) according to one of the previous claims, wherein the at least one device (122) of the vehicle (200) is a radio, an infotainment system, a navigation device, an air conditioning unit, or a mass storage device.

7. Human-machine-interface (102) according to one of the previous claims, wherein the control data is data generated by a controller controlling the user interface of the display (124) of the mobile device (104).

8. Vehicle (200), comprising a human-machine-interface (102) according to one of claims 1 to 7.

9. Method (300) for a communication between a human-machine-interface (102) and a mobile device (104) of a user, comprising
- providing (301) status data of a device (122) of a vehicle (200) via a communication interface (108) by a human-machine-interface (102) to the mobile device (104), which enables the mobile device (104) to mirror a human-machine-interface screen (116) on a mobile device screen (126);
- controlling (302) the device (122) of the vehicle (200) according to the status information.

10. Program element, which when being executed by the processor (106) of a human-machine-interface (102), instructs the vehicle (200) to perform the steps (301, 302) of claim 9.

11. Computer readable medium on which a program element according to claim 10 is stored.
